# EUROPÄISCHE PATENTSCHRIFT

(11) **EP 0 655 567 B1**
(45) Veröffentlichungstag und Bekanntmachung des Hinweises auf die Patenterteilung: **29.10.1997**
(21) Anmeldenummer: 94118183.6
(22) Anmeldetag: 18.11.1994
(51) Int. Cl.: F16F 15/16

(54) **Scheibenkupplung**
Disc clutch
Embrayage à disque

(30) Priorität: 25.11.1993 DE 4340155
(43) Veröffentlichungstag der Anmeldung: 31.05.1995
(73) Patentinhaber: Stromag Aktiengesellschaft, 59425 Unna (DE)
(72) Erfinder: Böhm, Peter, D 59423 Unna (DE)
(74) Vertreter: Wilhelm, Peter, Dipl.-Ing.

(56) Entgegenhaltungen:
- DE-C- 307 086
- FR-A- 1 375 156
- FR-A- 2 637 339

## Beschreibung

Die Erfindung betrifft eine Scheibenkupplung mit einer ersten Kupplungshälfte in Form einer Mittelscheibe, die an einer Nabe angeordnet ist, sowie mit einer zweiten Kupplungshälfte, die zwei die Mittelscheibe unter Bildung eines Füllraumes für eine Dämpfungsflüssigkeit umhüllende Seitenscheiben aufweist, wobei an einem Außenumfang der Mittelscheibe radiale Ausnehmungen und radiale Ansätze der Seitenscheiben miteinander unter Bildung von Drosselquerschnitten zur Dämpfung von Drehschwingungen in Wirkverbindung stehen.

Eine solche Scheibenkupplung ist aus der DE 28 48 748 B2 bekannt. Die eine Kupplungshälfte wird durch eine an einer Nabe angeordnete Mittelscheibe und die andere Kupplungshälfte durch zwei die Mittelscheibe umhüllende Seitenscheiben gebildet, wobei ein Füllraum für eine Dämpfungsflüssigkeit geschaffen wird. Über den Außenumfang der Mittelscheibe verteilt sind sechs trapezähnliche Ausnehmungen vorgesehen. In jede dieser Ausnehmungen ragt radial ein an einer der beiden Seitenscheiben angeformter Ansatz hinein. Diese Ansätze bilden ähnlich einer Verzahnung in Umfangsrichtung Festanschläge für die Mittelscheibe, so daß der Verdrehwinkel zwischen den beiden Kupplungshälften begrenzt ist. Zwischen den seitlichen Wandungen jeder Ausnehmung und den Seiten des korrespondierenden Ansatzes ist jeweils in Umfangsrichtung ein relativ großer Zwischenraum vorgesehen, dessen Größe den maximalen Verdrehwinkel bestimmt. In radialer Richtung hingegen ist zwischen dem Grund jeder Ausnehmung und der Stirnseite jedes Ansatzes nur ein relativ schmaler Spalt vorgesehen, der einen Drosselquerschnitt in Form eines Drosselspaltes bildet. Die beiden Zwischenräume der Ausnehmung zu beiden Seiten des Ansatzes bilden nämlich Verdrängungskammern für die Dämpfungsflüssigkeit, mit der die Scheibenkupplung aufgefüllt ist. Die beiden Verdrängungskammern sind lediglich über den Drosselspalt miteinander verbunden, so daß die beschriebene Anordnung zur Dämpfung von Drehschwingungen dient.

Aufgabe der Erfindung ist es, eine Scheibenkupplung der eingangs genannten Art zu schaffen, bei der in hohen Drehzahlbereichen eine reduzierte Dämpfung von Drehschwingungen erzielt wird.

Diese Aufgabe wird dadurch gelöst, daß zusätzliche Drosselquerschnitte vorgesehen sind, denen bei hohen Kupplungsdrehzahlen fliehkraftabhängig öffnende Drosselventile zugeordnet sind. Dadurch wird bei hohen Drehzahlen ein vergrößerter Strömungsquerschnitt für die Dämpfungsflüssigkeit erreicht, der eine reduzierte Dämpfung der Drehschwingungen bewirkt. Dabei ist es möglich, vorhandene Drosselspalte mit größeren Querschnitten zu versehen und diese zumindest teilweise durch die Drosselventile zu verschließen, so daß bei hohen Kupplungsdrehzahlen die Drosselspalte entsprechend erweitert werden. Es ist auch möglich, zusätzliche Strömungskanäle vorzusehen, die bei niedrigen Drehzahlen durch die Drosselventile vollständig verschlossen sind.

In Ausgestaltung der Erfindung ist in wenigstens einem die korrespondierende Ausnehmung in zwei Verdrängungskammern unterteilenden Ansatz ein die beiden Verdrängungskammern miteinander verbindender Überströmkanal vorgesehen, in dem ein fliehkraftabhängiges Drosselventil angeordnet ist. Dieser Überströmkanal dient als Drossel-Bypass, der mit dem bei hohen Drehzahlen aufgrund der auftretenden hohen Fliehkräfte öffnenden Drosselventil beaufschlagt ist.

In weiterer Ausgestaltung der Erfindung ist als fliehkraftabhängiges Drosselventil eine durch eine Druckfeder radial nach innen belastete, radial beweglich gelagerte Ventilkugel vorgesehen. Sie stellt eine besonders einfache Ausgestaltung eines fliehkraftabhängigen Drosselventiles dar.

In weiterer Ausgestaltung der Erfindung sind die Masse der Ventilkugel und die Federkraft der Druckfeder so abgestimmt, daß bei hohen Drehzahlen die Fliehkraft der Ventilkugel größer ist als die Federkraft der Druckfeder. Bei hohen Drehzahlen wird daher der zusätzliche Drosselquerschnitt des Überströmkanales freigesetzt.

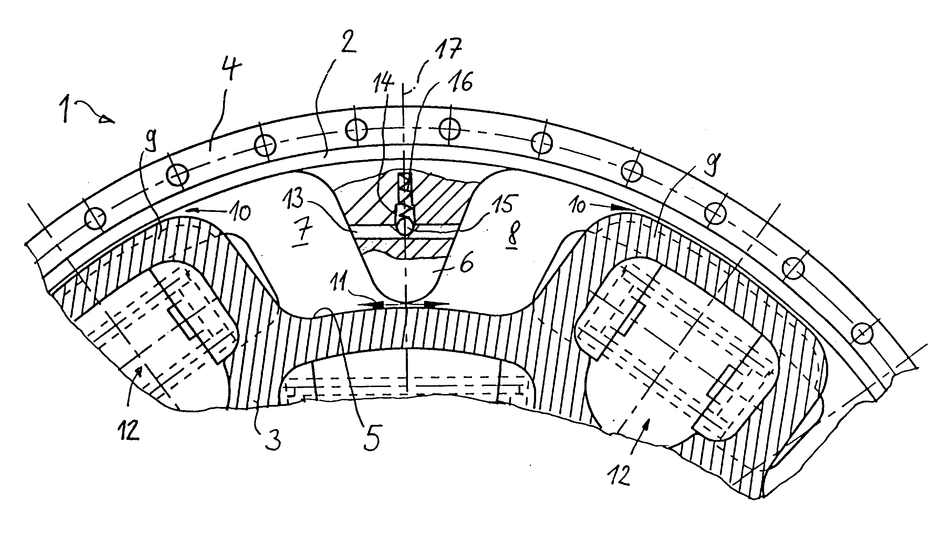

Weitere Vorteile und Merkmale der Erfindung ergeben sich aus den Unteransprüchen sowie aus der nachfolgenden Beschreibung eines Ausführungsbeispiels, das anhand der Zeichnung dargestellt ist.
Die Zeichnung zeigt in einem Schnitt einen Teil einer Ausführungsform einer erfindungsgemäßen Scheibenkupplung, die als hydraulischer Drehschwingungsdämpfer arbeitet.

Eine Scheibenkupplung (1) gemäß der Zeichnung weist eine aus Metall oder Kunststoff bestehende Mittelscheibe (3) auf, die in nicht dargestellter Weise auf einer Nabe angeordnet ist und die eine der beiden Kupplungshälften der Scheibenkupplung (1) bildet. Die Mittelscheibe ist über ihren Umfang verteilt mit sechs Fenstern (12) versehen, in denen in an sich bekannter Weise (DE 28 48 748 B2) Schraubenfedern angeordnet sind. Der Hauptwirkungsbereich der Scheibenkupplung (1) als hydraulischer Schwingungsdämpfer wird durch diese in den Fenstern (12) vorgesehenen Federn erzielt, die abhängig von Antrieben, Betriebsdrehzahlen und Hauptresonanzen jeweils entsprechend eingestellt werden. Die Mittelscheibe (3) ist von zwei starr miteinander verbundenen Seitenscheiben umhüllt, von denen lediglich die Seitenscheibe (2) dargestellt ist. Die beiden Seitenscheiben bilden die andere Kupplungshälfte der Scheibenkupplung (1). Die beiden Seitenscheiben umhüllen die Mittelscheibe (3) unter Bildung eines Füllraumes für eine Dämpfungsflüssigkeit, beim Ausführungsbeispiel Öl. Die Seitenscheibe (2) weist an ihrem Außenumfang einen umlaufenden Befestigungsflansch (4) auf, um die eine Kupplungshälfte mit dem jeweiligen Antriebs- oder Abtriebsteil zu verbinden. Die Mittelscheibe (3) als andere Kupplungshälfte ist über die Nabe mit dem jeweils anderen, korrespondierenden Antriebs- oder Abtriebsteil verbunden. Die Scheibenkupplung (1) ist zwischen einem Verbrennungsmotor und einem Getriebe eines Kraftfahrzeugs einsetzbar.

Zwischen jeweils zwei Fenstern (12) weist die Mittelscheibe (3) an ihrem Außenumfang jeweils eine trapezähnliche Ausnehmung (5) auf, die radial zur nicht dargestellten Mittellängsachse der Scheibenkupplung (1) nach innen eingebuchtet ist. Eine eine Symmetrieachse der Ausnehmung (5) bildende Radialachse ist mit dem Bezugszeichen (17) versehen. In die Ausnehmung (5) ragt ein am Innenumfang der Seitenscheibe (2) angeformter Ansatz (6) hinein. Im Bereich der die Fenster (12) einschließenden Rahmenteile (9) der Mittelscheibe (3) befindet sich der Innenumfang der Seitenscheibe (2) lediglich in geringem Abstand zum Außenrand der Mittelscheibe (3), wodurch in diesen Bereichen jeweils ein schmaler Spalt (10) gebildet wird. Der Ansatz (6) ist nasenförmig gestaltet und weist im Bereich seiner zum Grund der Ausnehmung (5) hin ragenden Stirnseite eine kreisabschnittförmige Rundung auf, die symmetrisch zur Symmetrieachse (17) sich von beiden Seiten tangential an den Grund der Ausnehmung (5) annähert. Dadurch wird zwischen dem Ansatz (6) und dem Grund der Ausnehmung (5) ein schmaler Spalt gebildet, dessen engster Querschnitt sich auf Höhe der Radialachse (17) befindet und der sich zu beiden Seiten erweitert. Zwischen den Flanken des Ansatzes (6) und den gegenüberliegenden, an den Grund anschließenden Seiten der Ausnehmung (5) ist je ein gleichgroßer Zwischenraum gebildet, der jeweils eine Verdrängungskammer (7, 8) darstellt. Die Querschnitte der Spalte (10) sowie der Spalte (11) zwischen jedem Ansatz (6) und jeder Ausnehmung (5) stellen Drosselquerschnitte dar, durch die das im Füllraum und unter anderem in den Verdrängungskammern (7, 8) befindliche Öl als Dämpfer für Drehschwingungen wirkt. Aufbau und Funktion der beschriebenen Ausführungsform entsprechen insoweit im wesentlichen der Scheibenkupplung gemäß der DE 28 48 748 B2.

Etwa parallel zum Dämpfungsspalt (11) und damit lotrecht zur radialen Symmetrieachse (17) verläuft durch den Ansatz (6) ein Überströmkanal (13), der zu beiden Verdrängungskammern (7 und 8) hin offen ist. Der Querschnitt des Überströmkanals (13) bleibt über seine Länge konstant. In der Mitte des Überströmkanals (13) ist ein fliehkraftabhängiges Drosselventil (14, 15, 16) angeordnet, das in der dargestellten Position den Überströmkanal (13) nahezu vollständig verschließt. Der Überströmkanal (13) ist durch das Drosselventil vollständig verschließbar. Das Drosselventil arbeitet als Rückschlagventil und weist eine Ventilkugel (15) auf, die in einer zur Radialachse (17) koaxialen Bohrung (14) beweglich ist. Die Bohrung (14) ragt vom Überströmkanal (13) aus im Ansatz (6) radial nach außen. Die Tiefe der Bohrung (14) ist dabei so bemessen, daß die Ventilkugel (15) so weit radial nach außen gedrückt werden kann, daß sie den Überströmkanal (13) über dessen gesamten Querschnitt freigibt. An der in der Bohrung (14) befindlichen Rückseite der Ventilkugel (15) ist eine Druckfeder (16) in Form einer Schraubenfeder angebracht, die koaxial zur Radialachse (17) im Ansatz (6) angeordnet ist. Die Druckfeder (16) übt auf die Ventilkugel (15) eine radial nach innen gerichtete Federkraft aus, die die Ventilkugel (15) in den Überströmkanal (13) hineinschiebt. Die Federkraft der Druckfeder (16) und die Masse der Ventilkugel (15) sind so aufeinander abgestimmt, daß die Fliehkraft der Ventilkugel (15) bei hohen Drehzahlen die entgegengerichtete Federkraft der Druckfeder (16) übersteigt und die Ventilkugel (15) aufgrund ihrer Fliehkraft in die Bohrung (14) gedrückt wird. Dadurch wird der Überströmkanal (13) freigesetzt, wodurch sich ein zusätzlicher Drosselquerschnitt zu den vorhandenen Drosselspalten (10 und 11) ergibt. Dadurch wird die Dämpfung von Drehschwingungen aufgrund von Torsionsmomenten bei einer Verdrehung der Mittelscheibe (3) relativ zu den Seitenscheiben (2) reduziert.

Bei anderen Ausführungsformen sind mehrere Ventile für verschiedene Drosselquerschnitte vorgesehen, die unterschiedliche Massen und Federn aufweisen, wodurch sich in einem größeren Drehzahlbereich unterschiedliche Dämpfungsquerschnitte erreichen lassen. Bei einem anderen nicht dargestellten Ausführungsbeispiel sind die fliehkraftabhängigen Drosselventile direkt den aktiven Drosselspalten (10 und 11) zugeordnet, wobei durch die fliehkraftabhängigen Drosselventile größere Querschnitte der vorhandenen Drosselspalte freisetzbar sind.

## Patentansprüche

1. Scheibenkupplung mit einer ersten Kupplungshälfte in Form einer Mittelscheibe, die an einer Nabe angeordnet ist, sowie mit einer zweiten Kupplungshälfte, die zwei die Mittelscheibe unter Bildung eines Füllraumes für eine Dämpfungsflüssigkeit umhüllende Seitenscheiben aufweist, wobei an einem Außenumfang der Mittelscheibe radiale Ausnehmungen und radiale Ansätze der Seitenscheibe miteinander unter Bildung von Drosselquerschnitten zur Dämpfung von Drehschwingungen in Wirkverbindung stehen, dadurch gekennzeichnet, daß zusätzliche Drosselquerschnitte (13) vorgesehen sind, denen bei hohen Kupplungsdrehzahlen fliehkraftabhängig öffnende Drosselventile (14, 15, 16) zugeordnet sind.

2. Scheibenkupplung nach Anspruch 1, dadurch gekennzeichnet, daß in wenigstens einem die korrespondierende Ausnehmung (5) in zwei Verdrängungskammern (7, 8) unterteilenden Ansatz (6) ein die beiden Verdrängungskammern (7, 8) miteinander verbindender Überströmkanal (13) vorgesehen ist, in dem ein fliehkraftabhängiges Drosselventil (14, 15, 16) angeordnet ist.

3. Scheibenkupplung nach Anspruch 2, dadurch gekennzeichnet, daß als fliehkraftabhängiges Drosselventil eine durch eine Druckfeder (16) radial nach innen belastete, radial bewegich gelagerte Ventilkugel (15) vorgesehen ist.

4. Scheibenkupplung nach Anspruch 3, dadurch gekennzeichnet, daß die Masse der Ventilkugel (15) und die Federkraft der Druckfeder (16) so abgestimmt sind, daß bei hohen Drehzahlen die Fliehkraft der Ventilkugel (15) größer ist als die Federkraft der Druckfeder (16).

## Claims

1. Disc coupling with a first coupling half in the form of a central disc fitted on a hub, and with a second coupling half which comprises two side discs that enclose the central disc to form a filling space for a damping fluid, whereby radial recesses around an outer circumference of the central disc and radial projections on the side disc are in active engagement with one another to form throttle cross-sections for the damping of rotational oscillations, characterized in that additional throttle cross-sections (13) are provided, with which throttle valves (14, 15, 16) are associated, the said valves opening in a centrifugal force dependent way at high revolution speeds of the coupling.

2. Disc coupling according to Claim 1, characterized in that in at least one projection (6) that divides the corresponding recess (5) into two displacement chambers (7, 8), an overflow channel (13) which connects the two displacement chambers (7, 8) to one another is provided, in which a centrifugal force dependent throttle valve (14, 15, 16) is fitted.

3. Disc coupling according to Claim 2, characterized in that as a centrifugal force dependent throttle valve, a valve ball (15) that can move radially and which is spring-loaded radially inwards by a compression spring (16) is provided.

4. Disc coupling according to Claim 3, characterized in that the mass of the valve ball (15) and the spring force of the compression spring (16) are matched to one another such that at high revolution speeds, the centrifugal force acting on the valve ball (15) is greater than the spring force exerted by the compression spring (16).

## Revendications

1. Embrayage à disques comportant une première moitié d'embrayage réalisée sous la forme d'un disque central, qui est monté sur un moyeu, ainsi qu'une seconde moitié d'embrayage, qui comporte deux disques latéraux qui enserrent le disque central en formant un espace de remplissage pour un liquide d'amortissement, dans lequel des évidements radiaux formés dans une périphérie extérieure du disque central et des appendices saillants radiaux du disque latéral coopèrent en formant des sections transversales d'étranglement pour amortir des oscillations de rotation, caractérisé en ce que des sections transversales supplémentaires d'étranglement (13) sont prévues, et qu'à ces sections transversales d'étranglement sont associées des soupapes d'étranglement (14,15,16), qui s'ouvrent en fonction de la force centrifuge, dans le cas de vitesses de rotation élevées de l'embrayage.

2. Embrayage à disques selon la revendication 1, caractérisé en ce que dans au moins un appendice saillant (6), qui subdivise l'évidement correspondant (5) en deux chambres de refoulement (7,8), est prévu un canal de trop-plein (13), qui relie entre elles les deux chambres de refoulement (7,8) et dans lequel est disposée une soupape d'étranglement (14,15,16), qui dépend de la force centrifuge.

3. Embrayage à disques selon la revendication 2, caractérisé en ce qu'il est prévu, comme soupape d'étranglement qui dépend de la force centrifuge, une bille de soupape (15) chargée radialement vers l'intérieur par un ressort de pression (16) et montée de manière à être déplaçable radialement.

4. Embrayage à disques selon la revendication 3, caractérisé en ce que la masse de la bille de soupape (15) et la force du ressort de pression (16) sont réglées de telle sorte que, pour des vitesses de rotation élevées, la force centrifuge de la bille de soupape (15) est supérieure à la force du ressort de pression (7).
